# EUROPEAN PATENT APPLICATION

(11) **EP 4 835 925 A1**
(43) Date of publication of application: **04.11.2026**
(21) Application number: 24911456.2
(22) Date of filing: 27.12.2024
(51) Int. Cl.: H01F 1/057, H01F 41/02

(54) **PERMANENT MAGNET MATERIAL, AND PREPARATION METHOD THEREFOR AND USE THEREOF**

(30) Priority: 29.12.2023 CN 202311857881; 29.12.2023 CN 202311857879
(71) Applicant: Yantai Zhenghai Magnetic Material Co., Ltd., Yantai Shandong 264006 (CN); Nantong Zhenghai Magnet Co., Ltd., 226500 Jiangsu (CN)
(72) Inventor: LI, Zhiqiang, Yantai, Shandong 264006 (CN); YU, Yongjiang, Yantai, Shandong 264006 (CN); WANG, Cong, Yantai, Shandong 264006 (CN); WANG, Pengfei, Yantai, Shandong 264006 (CN); WANG, Fulin, Yantai, Shandong 264006 (CN); SUN, Weitao, Yantai, Shandong 264006 (CN); LU, Zhen, Yantai, Shandong 264006 (CN)
(74) Representative: Gille Hrabal Partnerschaftsgesellschaft mbB Patentanwälte
(86) International application number: PCT/CN2024/143133
(87) International publication number: WO 2025/140536

(57) **Abstract**

Disclosed in the present disclosure are a permanent magnet material having a polyhedral structure, and a preparation method therefor and a use thereof. In the R-T-B system of the permanent magnet material, R comprises a light rare earth element and a heavy rare earth element; the light rare earth element (RL) at least comprises one or two selected from neodymium (Nd) and praseodymium (Pr); the heavy rare earth element (RH) at least comprises one or two selected from dysprosium (Dy) and terbium (Tb); T at least comprises iron (Fe); and B is boron. The permanent magnet material has a polyhedral structure, and the polyhedral structure comprises at least three outer surfaces, wherein the heavy rare earth content of the outer surfaces of the polyhedral structure is different. In the present disclosure, by controlling the coercivity gradient in specific directions, the coercivity distribution can meet the actual requirements of a motor for a magnet, and the content of heavy rare earth in the magnet can be effectively reduced, reducing the product costs; in addition, the process method is conducive to batch production.

## Description

The present application claims priority to the following prior applications: the Patent Application for Invention with the patent application No. 202311857881.4, filed with China National Intellectual Property Administration on December 29, 2023 and entitled "PERMANENT MAGNET MATERIAL HAVING POLYHEDRAL STRUCTURE, AND PREPARATION METHOD THEREFOR AND USE THEREOF", and the Patent Application for Invention with the patent application No. 202311857879.7, filed with China National Intellectual Property Administration on December 29, 2023 and entitled "PERMANENT MAGNET MATERIAL, AND PREPARATION METHOD THEREFOR AND USE THEREOF". The two prior patent applications described above are incorporated herein by reference in their entirety.

### TECHNICAL FIELD

The present disclosure belongs to the field of permanent magnet materials, and relates to a permanent magnet material, and a preparation method therefor and use thereof.

### BACKGROUND

Sintered neodymium-iron-boron is widely used as a third-generation rare earth permanent magnet material due to its excellent magnetic properties. In particular, with the rapid development in recent years of new energy vehicles, wind power generation, intelligent consumer electronics, energy-saving motors, and other fields, sintered neodymium-iron-boron materials have been more widely used.

The basic properties of the rare earth permanent magnet material can be evaluated by the following four performance parameters: remanence (i.e., residual magnetic flux density) Br, coercivity Hcb, intrinsic coercivity Hcj, and maximum magnetic energy product (BH)max. At present, when a permanent magnet made of a neodymium-iron-boron permanent magnet material is used in fields such as vehicle-mounted motors, the problem of local demagnetization of the permanent magnet is a key factor affecting motor stability. In order to solve such a problem, a grain boundary diffusion technology is proposed in the art, in which heavy rare earth is arranged on the surface of a magnet, such that the heavy rare earth enters the interior of the magnet along a grain boundary to improve the properties of the magnet and reduce the reduction of remanence. However, according to methods in the prior art, a grain boundary diffusion effect is mainly achieved by fully coating multiple surfaces of the permanent magnet material or by coating local corner regions. However, these methods suffer from problems such as high consumption of heavy rare earth, difficulty in controlling local coercivity, and unstable performance. In addition, the existing methods are difficult to implement in large-scale production.

Therefore, there is an urgent need to develop a permanent magnet material with improved properties and a preparation method therefor, so as to meet the requirements of downstream application fields.

### SUMMARY

In order to solve the problems described above, a first aspect of the present disclosure provides an R-T-B based permanent magnet material having a polyhedral structure, where:
R includes a light rare earth element and a heavy rare earth element;
the light rare earth element (RL) includes at least one or two selected from neodymium (Nd) and praseodymium (Pr);
the heavy rare earth element (RH) includes at least one or two selected from dysprosium (Dy) and terbium (Tb);
T includes at least iron (Fe);
B is boron; and
the permanent magnet material has the polyhedral structure, and the polyhedral structure includes at least three outer surfaces, where the outer surfaces of the polyhedral structure differ in a content of heavy rare earth.

According to embodiments of the present disclosure, the permanent magnet material is an anisotropic magnet having a polyhedral structure. Preferably, the polyhedral structure includes 3, 4, 5, 6, 7, 8 or more outer surfaces. For example, the polyhedral structure is provided with 3, 4, 5, 6, 7, or 8 outer surfaces. Those skilled in the art will appreciate that the polyhedral structure may also be named according to the number of its outer surfaces. For example, the polyhedral structure described above may also be referred to as a trihedron, tetrahedron, pentahedron, hexahedron, heptahedron, or octahedron.

According to the embodiments of the present disclosure, after the permanent magnet material undergoes a 150°C operational durability test, a loss rate of peak output torque of a motor is not more than 5%, preferably not more than 4.5%, and more preferably not more than 2.5%.

According to the embodiments of the present disclosure, there is at least one outer surface S_{H} among the outer surfaces of the polyhedral structure, and a weight percentage of a heavy rare earth element of the outer surface S_{H} is higher than that of heavy rare earth element of a core of a polyhedron. For ease of description, other outer surfaces in the polyhedral structure, except for the outer surface S_{H}, are referred to as S_{L} in the context of the present disclosure.

According to the embodiments of the present disclosure, preferably, when the number of the outer surfaces of the polyhedron is n, the number n_{H} of an outer surfaces S_{H} is: 1 ≤ n_{H} ≤ n.

According to the embodiments of the present disclosure, the number of the outer surfaces S_{H} is greater than that of outer surfaces S_{L}, or the number of the outer surfaces S_{H} is equal to that of the outer surfaces S_{L}, or the number of the outer surfaces S_{H} is less than that of the outer surfaces S_{L}.

For ease of description, when there are a plurality of outer surfaces S_{H}, different outer surfaces S_{H} may be numbered, such as S_{H1}, S_{H2}, S_{H3}, and so on.

Preferably, a weight percentage of a heavy rare earth element (measured by an X-ray fluorescence spectrometer) on each of the outer surfaces is less than 10 wt%, for example, 0 wt% to 7 wt%. According to the embodiments of the present disclosure, the heavy rare earth element (RH) has the meaning well known in the art, and at least includes one or two selected from dysprosium (Dy) and terbium (Tb), and may also be selected from one or more of gadolinium (Gd), holmium (Ho), erbium (Er), thulium (Tm), ytterbium (Yb), lutetium (Lu), and yttrium (Y).

According to the embodiments of the present disclosure, the light rare earth element has the meaning well known in the art, and at least includes one or two selected from neodymium (Nd) and praseodymium (Pr), and may also be selected from one or more of lanthanum (La), cerium (Ce), promethium (Pm), samarium (Sm), and europium (Eu).

According to the embodiments of the present disclosure, preferably, the outer surfaces S_{L} are parallel to an orientation direction of a magnet of the permanent magnet material, and/or the outer surfaces S_{L} are not parallel to a central axis direction of a motor in which the permanent magnet material is located.

According to the embodiments of the present disclosure, the permanent magnet material may further include or may not include M, the M being selected from one or more of a transition metal element and a non-metal element.

According to the embodiments of the present disclosure, T is selected from iron (Fe) or a mixture of iron with other metal elements, where preferably, the other metals may be selected from one or more of transition metal elements other than iron.

The transition metal elements in the context of the present disclosure have the meaning well known in the art and refer to the metal elements of regions d and ds in the periodic table of elements, where the elements of region d include elements of groups IIIB to VIIB, VIII, but exclude lanthanides and actinides; and the elements of region ds include elements of groups IB to IIB. Generally, the transition metal elements include elements of a total of ten groups of 3 to 12, but exclude internal transition elements of region f (elements No. 58 to No. 71 in the periodic table are called internal transition elements of 4f, and elements No. 90 to No. 103 are called internal transition elements of 5f, all of which are elements of region f).

According to the embodiments of the present disclosure, the other metals may be selected from one or more of copper (Cu), gallium (Ga), aluminum (Al), zirconium (Zr), titanium (Ti), niobium (Nb), tin (Sn), tantalum (Ta), and manganese (Mn).

According to the embodiments of the present disclosure, M is preferably selected from one or more of Cu, Ga, Al, Zr, Ti, Nb, Sn, Ta, and Mn, such as one or more of Zr, Cu, Ga, and Al.

According to the embodiments of the present disclosure, a mass percentage of R is not less than 28.5% and not more than 32.5%, based on the mass of the permanent magnet material, and an example thereof may be 28.5%, 29.0%, 29.5%, 30.0%, 30.5%, 31.0%, 31.5%, 32.0%, or 32.5%.

According to the embodiments of the present disclosure, a mass percentage of B is not less than 0.88% and not more than 1.05%, based on the mass of the permanent magnet material, and an example thereof may be 0.88%, 0.90%, 0.92%, 0.95%, 0.98%, 1.00%, 1.02%, or 1.05%.

According to the embodiments of the present disclosure, a total mass percentage of M is not less than 0.1% and not more than 4.0%, preferably not less than 0.3% and not more than 3.5%, based on the mass of the permanent magnet material, and an example thereof may be 0.3%, 0.5%, 1.0%, 1.5%, 2.0%, 2.5%, 3.0%, or 3.5%.

According to the embodiments of the present disclosure, the permanent magnet material includes Ga. Preferably, a mass percentage of Ga is not less than 0.1% and not more than 0.6%, based on the mass of the permanent magnet material, and an example thereof may be 0.1%, 0.2%, 0.3%, 0.4%, 0.5%, or 0.6%.

According to the embodiments of the present disclosure, the permanent magnet material includes Co. Preferably, a mass percentage of Co is not less than 0% and not more than 3.0%, preferably not less than 0% and not more than 3.0%, based on the mass of the permanent magnet material, and an example thereof may be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, or 3.0%.

According to the embodiments of the present disclosure, the permanent magnet material includes Cu. Preferably, a mass percentage of Cu is not less than 0% and not more than 0.8%, preferably more than 0% and not more than 0.4%, based on the mass of the permanent magnet material, and an example thereof may be 0.1%, 0.2%, 0.3%, 0.4%, 0.5%, 0.6%, 0.7%, or 0.8%.

According to the embodiments of the present disclosure, the balance of the permanent magnet material is Fe and inevitable impurities, and the inevitable impurities are, for example, at least one of C, S, N, O, and the like.

According to the embodiments of the present disclosure, when present, a mass percentage of C is 400 ppm to 800 ppm, based on the mass of the permanent magnet material.

According to the embodiments of the present disclosure, when present, a mass percentage of O is 300 ppm to 900 ppm, based on the mass of the permanent magnet material.

According to the embodiments of the present disclosure, when present, a mass percentage of N is 400 ppm to 800 ppm, based on the mass of the permanent magnet material.

According to the embodiments of the present disclosure, when present, a mass percentage of S is 0 ppm to 100 ppm, based on the mass of the permanent magnet material.

According to the embodiments of the present disclosure, coercivity shows a decreasing trend from a surface of the permanent magnet material toward a core of the permanent magnet material;
for an S_{H} surface parallel to the orientation direction of the magnet, an absolute value of a coercivity difference at a distance D1 is ΔHcjm; for example, within a range of the distance D1, ΔHcjm = |ΔHcj|/D1;
for other S_{H} surfaces and/or S_{L} surfaces, an absolute value of a coercivity difference at a distance D2 is ΔHcjn; for example, within a range of the distance D2, ΔHcjn = |ΔHcj|/D2; and
when D1 = D2, and distances between starting points of D1 and D2 and a surface of the magnet are equal, ΔHcjm > ΔHcjn.

According to the embodiments of the present disclosure, the distance D1 or D2 represents a distance between any two points between the surface of the permanent magnet material and the core of the permanent magnet material. Preferably, for an S_{H} surface parallel to both the orientation direction of the magnet and a central axis of the motor, an absolute value of a coercivity difference per unit distance is ΔHcjm.

According to the embodiments of the present disclosure, when the polyhedron is of a non-hexahedral structure, an angle between the S_{H} surface of the magnet and the orientation direction of the magnet is α, and α ≤ 45°.

According to the embodiments of the present disclosure, ΔHcjn ≤ 0.3 kOe/mm, and ΔHcjm ≥ 0.3 kOe/mm.

According to the embodiments of the present disclosure, the permanent magnet material is a sintered permanent magnet.

The present disclosure also provides a method for preparing the permanent magnet material, where the method includes the following steps:
(1) coating a mixture A and/or a mixture B on a surface perpendicular to an orientation direction of a magnet matrix, and coating the mixture A and/or the mixture B on a surface parallel to the orientation direction of the magnet matrix; and
(2) performing a grain boundary diffusion treatment and an aging treatment on a neodymium-iron-boron magnet material obtained in step (a) to obtain a sintered neodymium-iron-boron permanent magnet with a gradient distribution.

According to the embodiments of the present disclosure, in step (a), one, two, three, or four coating surfaces are provided, and each coating surface includes at least one surface parallel to the central axis of the motor, where a ratio of the area of a coating region to the area of a surface of the magnet on which the coating region is located is less than or equal to 100%.

According to the embodiments of the present disclosure, the mixture A and/or the mixture B may each include: RH powder and/or RL powder, the RH and the RL having the meanings as described above.

Preferably, the RH powder is selected from at least one of elemental RH metal, an RH alloy, an RH oxide, an RH fluoride, an RH hydride, and an RH oxyfluoride.

Preferably, the RL powder is selected from at least one of elemental RL metal, an RL alloy, an RL oxide, an RL fluoride, an RL hydride, and an RL oxyfluoride.

Preferably, the mixture A and/or the mixture B may further include an organic solvent.

Preferably, the mixture A and/or the mixture B may further include an antioxidant and/or a dispersant, etc., to reduce the agglomeration of rare earth in a slurry, such that the rare earth in the slurry is more uniformly distributed.

The antioxidant is, for example, selected from at least one of toluene, 4-hexylresorcinol, and dibutylhydroxytoluene.

The dispersant is not particularly limited in the present disclosure, and may be any dispersant known to those skilled in the art for such reaction, and may be selected and adjusted by those skilled in the art according to the actual production situation, product requirements, quality control, and other factors. The dispersant in the present disclosure preferably includes at least one of polyethylene glycol-400 and terpineol.

The organic solvent is preferably an alcohol, ketone, or ether that can dissolve with the antioxidant, is readily volatile, and has low viscosity, and may be selected from ethanol, acetone, butanone, and the like.

According to the embodiments of the present disclosure, when the mixture A and/or the mixture B includes Dy, a percentage of a Dy element in weight of a magnet matrix is 0.3% to 1.2%; and when the mixture A and/or the mixture B includes Tb, a percentage of a Tb element in the weight of the magnet matrix is 0.1% to 0.7%.

According to the embodiments of the present disclosure, when the mixture A and/or the mixture B includes Pr and/or Nd, a percentage of Pr and/or Nd in weight of a magnet matrix is 0.3% to 1.2%. According to the embodiments of the present disclosure, the method further includes the preparation of the magnet matrix, which is a conventional method in the art.

According to the embodiments of the present disclosure, the grain boundary diffusion treatment may be a method known to those skilled in the art. For example, the method may include a thermal diffusion treatment and a tempering treatment.

According to the embodiments of the present disclosure, the thermal diffusion treatment is a grain boundary diffusion treatment, and the treatment method thereof is a process known in the art. The temperature of the thermal diffusion treatment may be not less than 800 °C, for example, 850 °C to 950 °C, and an example thereof may be 800 °C, 810 °C, 820 °C, 830 °C, 840 °C, 850 °C, 860 °C, 870 °C, 880 °C, 890 °C, or 900 °C. The time for the thermal diffusion treatment may be not less than 5 h, for example, 10 h to 50 h, such as 10 h, 15 h, 20 h, 25 h, 30 h, 35 h, 40 h, 45 h, or 50 h.

According to the embodiments of the present disclosure, the temperature of the tempering treatment may be not more than 700 °C, for example, 450 °C to 650 °C, and an example thereof may be 450 °C, 460 °C, 470 °C, 480 °C, 490 °C, 500 °C, 510 °C, 520 °C, 530 °C, 540 °C, 550 °C, 560 °C, 570 °C, 580 °C, 590 °C, 600 °C, 610 °C, 620 °C, 630 °C, 640 °C, or 650 °C. The time for the tempering treatment may be not less than 1 h, for example, 1 h to 10 h, and an example thereof may be 1 h, 2 h, 3 h, 4 h, 5 h, 6 h, 7 h, 8 h, 9 h, or 10 h.

According to the embodiments of the present disclosure, the aging treatment may be a method known to those skilled in the art.

The present disclosure also provides use of the Re-Fe-B based permanent magnet material described above in fields of motors, loudspeakers, magnetic separators, computer disk drives, magnetic resonance imaging apparatuses and the like, preferably in embedded motors, in particular as a motor rotor magnet in an embedded motor.

The present disclosure also provides a motor. The motor includes the Re-Fe-B based permanent magnet material described above. Preferably, the motor is an embedded motor, and the Re-Fe-B based permanent magnet material is assembled in the embedded motor in an embedded manner.

A second aspect of the present disclosure provides an R-T-B based permanent magnet material, which may optionally have or not have any one or more of the features described above.

In the R-T-B based permanent magnet material according to the second aspect, the permanent magnet material has at least one cross section, the cross section is divided into N regions from a surface of the magnet to a core of the magnet, and 3 ≤ N ≤ 10; and coercivity at interfaces between adjacent regions is the same, and along the surface of the magnet to the core of the magnet, coercivity at interfaces between regions gradually decreases in a direction parallel to the orientation direction.

According to the embodiments of the present disclosure, the coercivity at the interfaces between the adjacent regions is denoted as Hcj_{A}, and the permanent magnet material includes at least the N regions, which are sequentially denoted as a first region, a second region, a third region, ..., and an N-th region from the surface of the magnet to the core of the magnet; for example, coercivity at an interface between the first region and the second region is denoted as Hcj_{A12}, and an area ratio of the first region is denoted as S₁; coercivity at an interface between the second region and the third region is denoted as Hcj_{A23}, and an area ratio of the second region is denoted as S₂; coercivity at an interface between the third region and a fourth region is denoted as Hcj_{A34}, and an area ratio of the third region is denoted as S₃, and so on; coercivity at an interface between an (N-1)-th region and the N-th region is denoted as Hcj_{A(n-1)n}, and an area ratio of the (N-1)-th region is denoted as S₍ₙ₋₁₎; and the coercivity at the interfaces between the regions satisfies: Hcj_{A12} > Hcj_{A23} > Hcj_{A34} ... > Hcj_{A(n-1)n}.

According to the embodiments of the present disclosure, the permanent magnet material is also referred to as a magnet.

According to the embodiments of the present disclosure, there is at least one cross section that divides the permanent magnet material into the N regions, and the N regions are symmetrically distributed with the core of the magnet as a center. Preferably, in mutually mirror-symmetrical regions, the coercivity of the magnet is the same.

According to the embodiments of the present disclosure, in the case that coercivity differences at the interfaces between the adjacent regions are the same, i.e., in the case that Hcj_{A12} - Hcj_{A23} = Hcj_{A23} - Hcj_{A34} ... = Hcj_{A(n-2)(n-1)} - Hcj_{A(n-1)n}, areas of the regions satisfy: S₁ < S₂ < S₃ ... < Sₙ.

According to the embodiments of the present disclosure, the interfaces between the adjacent regions are irregular curves.

According to the embodiments of the present disclosure, the interfaces between the adjacent regions are non-linearly distributed with no intersection.

According to the embodiments of the present disclosure, the interfaces between the adjacent regions are arc-shaped.

According to the embodiments of the present disclosure, the arc is a regular curve, and the arc is symmetrical with respect to a center line thereof.

According to the embodiments of the present disclosure, the permanent magnet material has at least one cross section, and △Hcj ≥ 20 kA/m; and ΔHcj is a coercivity difference at adjacent interfaces, i.e., Hcj_{A12} - Hcj_{A23} or Hcj_{A23} - Hcj_{A34}, and so on.

According to the embodiments of the present disclosure, a cross-sectional area of the permanent magnet material from a surface of the magnet to a core of the magnet is S, a ratio of the area S₁ of the first region to S satisfies: S₁/S ≤ 1/(2 * N), and a ratio of an area Sₙ of the N-th region to S satisfies: 1/N ≤ Sₙ/S ≤ 2/N.

According to the embodiments of the present disclosure, on the cross section, an average content of heavy rare earth of each region of the permanent magnet material is different from that of any other region.

According to the embodiments of the present disclosure, on the cross section, a content of heavy rare earth of each region gradually decreases from the surface of the magnet to the core of the magnet in the orientation direction.

According to the embodiments of the present disclosure, a difference in a content of heavy rare earth between a first region and a last region is less than or equal to 5 wt%. Specifically, the difference is greater than 0.

According to the embodiments of the present disclosure, a difference in the content of heavy rare earth between adjacent regions is less than or equal to 3 wt%. Specifically, the difference is greater than 0.

According to the embodiments of the present disclosure, the permanent magnet material has at least three surfaces that are not parallel to one another, where in the three surfaces, in a direction perpendicular to each surface, absolute values of differences between a maximum coercivity value at an edge position and a minimum coercivity value at a core position are different from one another:
in at least one surface, an absolute value δHcjₐ of the difference between the maximum coercivity value at the edge position and the minimum coercivity value at the core position is greater than or equal to 40 kA/m, for example, 40 kA/m ≤ δHcjₐ ≤ 160 kA/m;
in at least one surface, an absolute value δHcj_{b} of the difference between the maximum coercivity value at the edge position and the minimum coercivity value at the core position is greater than or equal to 20 kA/m, for example, 20 kA/m ≤ δHcj_{b} ≤ 80 kA/m; and
in at least one surface, an absolute value δHcj_{c} of the difference between the maximum coercivity value at the edge position and the minimum coercivity value at the core position is greater than or equal to 5 kA/m, for example, 5 kA/m ≤ δHcj_{c} ≤ 40 kA/m.

According to the embodiments of the present disclosure, a demagnetization rate of the permanent magnet material is not more than 3%, preferably not more than 2%, and more preferably not more than 0.5%.

According to the embodiments of the present disclosure, the R is a heavy rare earth element (HRE) or a light rare earth element; and the heavy rare earth element (HRE) has a meaning well known in the art, and may be selected from one or more of gadolinium (Gd), terbium (Tb), dysprosium (Dy), holmium (Ho), erbium (Er), thulium (Tm), ytterbium (Yb), lutetium (Lu), and yttrium (Y). According to the embodiments of the present disclosure, T is selected from iron (Fe) or a mixture of iron with other metal elements, where preferably, the other metals may be selected from one or more of transition metal elements other than iron.

The transition metal elements in the context of the present disclosure have the meaning well known in the art and refer to the metal elements of regions d and ds in the periodic table of elements, where the elements of region d include elements of groups IIIB to VIIB, VIII, but exclude lanthanides and actinides; and the elements of region ds include elements of groups IB to IIB. Generally, the transition metal elements include elements of a total of ten groups of 3 to 12, but exclude internal transition elements of region f (elements No. 58 to No. 71 in the periodic table are called internal transition elements of 4f, and elements No. 90 to No. 103 are called internal transition elements of 5f, all of which are elements of region f).

According to the embodiments of the present disclosure, the other metals may be selected from one or more of copper (Cu), gallium (Ga), aluminum (Al), zirconium (Zr), titanium (Ti), tin (Sn), tantalum (Ta), and manganese (Mn).

According to the embodiments of the present disclosure, the permanent magnet material may further include M, the M being selected from one or more of a transition metal element, a non-metal element, and a light rare earth element.

According to the embodiments of the present disclosure, the light rare earth element may be selected from cerium group rare earth elements, such as lanthanum (La), cerium (Ce), praseodymium (Pr), neodymium (Nd), promethium (Pm), samarium (Sm), and europium (Eu).

According to the embodiments of the present disclosure, M is preferably selected from one or more of Cu, Ga, Al, Zr, Ti, Sn, Ta, and Mn, such as one or more of Cu, Ga, and Al.

According to the embodiments of the present disclosure, a mass percentage of R is not less than 28.5% and not more than 32.5%, based on the mass of the permanent magnet material, and an example thereof may be 28.5%, 29.0%, 29.5%, 30.0%, 30.5%, 31.0%, 31.5%, 32.0%, or 32.5%.

According to the embodiments of the present disclosure, a mass percentage of B is not less than 0.88% and not more than 1.05%, based on the mass of the permanent magnet material, and an example thereof may be 0.88%, 0.90%, 0.92%, 0.95%, 0.98%, 1.00%, 1.02%, or 1.05%.

According to the embodiments of the present disclosure, a total mass percentage of M is not less than 0.1% and not more than 4.0%, preferably not less than 0.3% and not more than 3.5%, based on the mass of the permanent magnet material, and an example thereof may be 0.3%, 0.5%, 1.0%, 1.5%, 2.0%, 2.5%, 3.0%, or 3.5%.

According to the embodiments of the present disclosure, the permanent magnet material includes Ga. Preferably, a mass percentage of Ga is not less than 0.1% and not more than 0.6%, based on the mass of the permanent magnet material, and an example thereof may be 0.1%, 0.2%, 0.3%, 0.4%, 0.5%, or 0.6%.

According to the embodiments of the present disclosure, the permanent magnet material includes Co. Preferably, a mass percentage of Co is not less than 0% and not more than 3.0%, preferably not less than 0% and not more than 3.0%, based on the mass of the permanent magnet material, and an example thereof may be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, or 3.0%.

According to the embodiments of the present disclosure, the permanent magnet material includes Cu. Preferably, a mass percentage of Cu is not less than 0% and not more than 0.4%, preferably not less than 0% and not more than 0.4%, based on the mass of the permanent magnet material, and an example thereof may be 0.1%, 0.2%, 0.3%, or 0.4%.

According to the embodiments of the present disclosure, the balance of the permanent magnet material is Fe and inevitable impurities, and the inevitable impurities are, for example, at least one of C, N, O, and the like.

According to the embodiments of the present disclosure, when present, a mass percentage of C is 400 ppm to 800 ppm, based on the mass of the permanent magnet material.

According to the embodiments of the present disclosure, when present, a mass percentage of O is 300 ppm to 900 ppm, based on the mass of the permanent magnet material.

According to the embodiments of the present disclosure, when present, a mass percentage of N is 400 ppm to 800 ppm, based on the mass of the permanent magnet material.

According to the embodiments of the present disclosure, when present, a total mass of C, O, and N does not exceed 2000 ppm, based on the mass of the permanent magnet material.

According to the embodiments of the present disclosure, remanence at interfaces between adjacent regions is the same, and the remanence at the interfaces gradually increases in the orientation direction. According to the embodiments of the present disclosure, the remanence at the interfaces between the adjacent regions is denoted as Br_{T}, and remanence at an interface between a first region and a second region is denoted as Br_{T12}; remanence at an interface between the second region and a third region is denoted as Br_{T23}; remanence at an interface between the third region and a fourth region is denoted as Br_{T34}, and so on; remanence at an interface between an (N-1)-th region and an N-th region is denoted as Br_{T(n-1)n}; and remanence at interfaces between regions satisfies: Br_{T12} < Br_{T23} < Br_{T34} ... < BrT(n-1)n.

According to the embodiments of the present disclosure, ΔBr ≤ 0.04 T, and ΔBr represents a remanence difference at adjacent interfaces, i.e., Br_{T12} - Br_{T23} or Br_{T34} - Br_{T23}, and so on.

The present disclosure also provides a method for preparing a permanent magnet material, and the method includes the following steps:
(a) preparing an R-T-B based magnet matrix;
(b) arranging a diffusion source containing heavy rare earth to a surface of the matrix; and
(c) performing a grain boundary diffusion treatment and an aging treatment on a magnet material obtained in step (b) to obtain a permanent magnet material.

According to the embodiments of the present disclosure, in step (a), the R-T-B based magnet matrix may be selected from matrices known in the art, for example, matrices prepared from starting materials known in the art.

According to the embodiments of the present disclosure, in step (b), the diffusion source containing heavy rare earth is selected from Dy and/or Tb pure metals, or alloys such as hydrides, oxides, hydroxides, and fluorides of Dy and/or Tb.

According to the embodiments of the present disclosure, in step (b), the diffusion source containing heavy rare earth further includes RH, and the RH is selected from one, two, or more of Nd, La, Ce, Pr, Ho, and Gd, so as to form a mixed rare earth diffusion source.

According to embodiments of the present disclosure, in step (b), in the diffusion source containing heavy rare earth, a proportion of Dy and/or Tb pure metals, compounds, or alloys accounts for not less than 50% of the total amount of the diffusion source containing heavy rare earth. Since heavy rare earth plays an irreplaceable role in improving temperature resistance, the proportion of Dy and/or Tb pure metals, compounds, or alloys in the heavy rare earth diffusion source needs to be controlled. In the case that the amount of Dy and/or Tb pure metals, compounds, or alloys are lower than the proportion described above, the effect of improving the temperature resistance of the neodymium-iron-boron magnet will be insignificant.

According to the embodiments of the present disclosure, in step (b), the diffusion source containing heavy rare earth may be in the form of powder or may be a slurry containing an organic solvent.

According to the embodiments of the present disclosure, in step (b), the diffusion source containing heavy rare earth is arranged on the surface of the magnet to form coating surfaces. One, two, three, four, five, or six coating surfaces are provided, and each coating surface includes at least one surface parallel to the central axis of the motor, where a ratio of the area of a coating region to the area of a surface of the magnet on which the coating region is located is less than 100%.

According to the embodiments of the present disclosure, in step (b), the diffusion source containing heavy rare earth is arranged on the surface of the magnet to form a plurality of coating surfaces, and a coating amount on at least one of the coating surfaces is different from that on another coating surface.

Preferably, coating amounts on any three or more of the plurality of coating surfaces are different. According to the embodiments of the present disclosure, the coating amount refers to a difference in RH category, RH content, weight, concentration, thickness, coating area, and the like.

Preferably, in step (b), when the diffusion source containing heavy rare earth is in the form of powder, an average particle size of the powder of the diffusion source containing heavy rare earth is 2 µm to 200 µm.

Preferably, in step (b), when the diffusion source containing heavy rare earth is an organic solvent slurry, the organic solvent is preferably an alcohol, ketone, or ether that is readily volatile and has low viscosity, and may be selected from ethanol, acetone, butanone, and the like.

Preferably, in step (b), when the diffusion source containing heavy rare earth is an organic solvent slurry, a weight ratio of the diffusion source containing heavy rare earth to the organic solvent is (70-95):(5-30).

According to the embodiments of the present disclosure, in step (b), a method for arranging the diffusion source containing heavy rare earth on the magnet matrix may be selected from vacuum evaporation, magnetron sputtering, screen printing, coating, embedding, or the like.

According to the embodiments of the present disclosure, in step (c), the grain boundary diffusion treatment may be a method known to those skilled in the art. For example, the treatment is a high-temperature diffusion treatment.

According to the embodiments of the present disclosure, the temperature of the grain boundary diffusion treatment may be not less than 800 °C, for example, 850 °C to 950 °C, and an example thereof may be 800 °C, 810 °C, 820 °C, 830 °C, 840 °C, 850 °C, 860 °C, 870 °C, 880 °C, 890 °C or 900 °C. The time for the grain boundary diffusion treatment may be not less than 5 h, for example, 10 h to 50 h, such as 10 h, 15 h, 20 h, 25 h, 30 h, 35 h, 40 h, 45 h, or 50 h.

Preferably, in step (c), a diffusion aging treatment further includes diffusion cooling at a temperature of less than 100 °C.

According to the embodiments of the present disclosure, in step (c), the temperature of the aging treatment may be not more than 700 °C, for example, 450 °C to 650 °C, and an example thereof may be 450 °C, 460 °C, 470 °C, 480 °C, 490 °C, 500 °C, 510 °C, 520 °C, 530 °C, 540 °C, 550 °C, 560 °C, 570 °C, 580 °C, 590 °C, 600 °C, 610 °C, 620 °C, 630 °C, 640 °C, or 650 °C. The time for the aging treatment may be not less than 1 h, for example, 1 h to 10 h, and an example thereof may be 1 h, 2 h, 3 h, 4 h, 5 h, 6 h, 7 h, 8 h, 9 h, or 10 h.

Alternatively, the aging treatment procedure may be performed after the processing procedure described below. The processing procedure may be performed as needed to process the obtained sintered magnet into a desired shape. As an example, the processing procedure may include shape processing such as cutting, grinding, and the like, and chamfering processing such as barrel polishing, and the like.

The present disclosure also provides use of the Re-Fe-B based permanent magnet material described above in fields of motors, loudspeakers, magnetic separators, computer disk drives, magnetic resonance imaging apparatuses and the like, preferably in embedded motors, in particular as a motor rotor magnet in an embedded motor.

The present disclosure also provides a motor. The motor includes the permanent magnet material described above. Preferably, the motor is an embedded motor. Preferably, the permanent magnet material is assembled in the embedded motor in an embedded manner.

It should be understood that the R-T-B based permanent magnet material of the present disclosure may independently have the technical features described in the first aspect or the second aspect described above. However, this does not mean that the technical features of the first aspect and the second aspect must exist independently. Alternatively, the present disclosure also provides an R-T-B based permanent magnet material, which has the technical features described in the first aspect and the second aspect described above.

In other words, the R-T-B based permanent magnet material may have both the technical features of the first aspect described above and the technical features of the second aspect described above. However, in the case that the technical features of the first aspect and the second aspect have been respectively described in the specification of the present disclosure, the inventors do not repeat the combinations of these features for the sake of brevity.

For example, the R-T-B based permanent magnet material having the polyhedral structure according to the first aspect of the present disclosure is also characterized in that there is at least one cross section, the cross section is divided into N regions from a surface of the magnet to a core of the magnet, and 3 ≤ N ≤ 10; and coercivity at interfaces between adjacent regions is the same, and along the surface of the magnet to the core of the magnet, coercivity at interfaces between regions gradually decreases in a direction parallel to the orientation direction. The cross section, the N regions and the coercivity of the R-T-B based permanent magnet material may further have any one or more of the features described in the second aspect of the present disclosure.

For another example, the R-T-B based permanent magnet material according to the second aspect of the present disclosure is characterized in that R includes a light rare earth element and a heavy rare earth element; the light rare earth element (RL) includes at least one or two selected from neodymium (Nd) and praseodymium (Pr); the heavy rare earth element (RH) includes at least one or two selected from dysprosium (Dy) and terbium (Tb); T includes at least iron (Fe); B is boron; and the permanent magnet material has the polyhedral structure, and the polyhedral structure includes at least three outer surfaces, where the outer surfaces of the polyhedral structure differ in a content of heavy rare earth.

The elemental composition of the R-T-B based permanent magnet material, the polyhedral structure, and the content of heavy rare earth of the outer surface of the polyhedral structure may further have any one or more of the features described in the first aspect of the present disclosure.

### Beneficial effects

In one aspect, in the present disclosure, coercivity decay rate is controlled in a specific direction, such that coercivity distribution can meet the actual requirements of a motor for a magnet, while effectively reducing a content of heavy rare earth in the magnet, thereby reducing product costs and enabling the process method to be suitable for mass production.

In conventional homogeneous neodymium-iron-boron permanent magnets or heavy rare earth diffusion magnets, coercivity distribution characteristics inside the magnet cannot fully match those of the motor, and thus cannot fully meet the requirements of the optimal demagnetization strategy of the motor. When the neodymium-iron-boron permanent magnet of the present disclosure is used in a motor, the cutting magnetic field of the permanent magnet will also generate induced electromotive force and induced current, and the resulting reversed magnetic field is constrained by the magnetic circuit design of the motor, and is often concentratively distributed in two directions perpendicular to a central axis of a motor rotor. By adjusting the coercivity in the magnet, the coercivity decay rate in the direction perpendicular to the central axis of the motor rotor is appropriately increased, while the coercivity decay rate in a direction parallel to the central axis of the motor rotor is appropriately reduced, such that the coercivity exhibits a gradient distribution and matches the distribution law of the reverse magnetic field in the motor. By distributing heavy rare earth for improving the coercivity of the magnet to regions where the demagnetization resistance needs to be enhanced most, the distribution of the content of heavy rare earth in the magnet, the coercivity distribution of the magnet, and the distribution of the reverse magnetic field in the motor will be matched to the greatest extent, thereby better conforming to the safety protection strategy of the motor.

Under the condition of using the same amount of a heavy rare earth diffusion source, the magnet having high intrinsic coercivity amplification is obtained in the present disclosure, and the production costs of the magnet are reduced.

In another aspect, in the permanent magnet material of the present disclosure, the magnitude of a coercivity gradient is controlled in a specific direction, such that coercivity distribution of a permanent magnet material meets the actual requirements of a motor for a magnet, while effectively reducing a content of heavy rare earth in the magnet, thereby reducing product costs and enabling the disclosed method to be suitable for mass production. Meanwhile, a diffusion treatment is performed by using a neodymium-iron-boron magnet matrix having lower C, O, and N impurity contents, such that better grain boundaries and better diffusion channels are provided. The permanent magnet material of the present disclosure exhibits different coercivity and remanence characteristics in different regions, such that resistance to demagnetization varies among different regions, and from the surface of the magnet to the core of the magnet, the magnet can maintain resistance to magnetic property degradation during application, thereby achieving stable application.

### BRIEF DESCRIPTION OF THE DRAWINGS

FIG. 1 is a schematic structural view of a permanent magnet material according to Examples 1-5 of the present disclosure, where AA' is a magnetizing direction.
FIG. 2 is a schematic diagram of a coating manner of a heavy rare earth element in Comparative Example 3.
FIG. 3 is a schematic diagram of specific positions of a permanent magnet material according to Examples 1-5 of the present disclosure.
FIG. 4 is a schematic diagram of a cutting manner of a magnet material according to Examples 6-9 of the present disclosure.

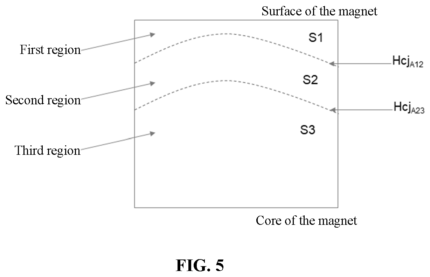

FIG. 5 is a schematic diagram of division of different regions on a cross section S_{CF1} according to Example 6-1.

### DETAILED DESCRIPTION

The technical solutions of the present disclosure will be further illustrated in detail with reference to the following specific examples. It should be understood that the following examples are merely exemplary illustrations and explanations of the present disclosure, and should not be construed as limiting the protection scope of the present disclosure. All techniques implemented based on the content of the present disclosure described above are encompassed within the protection scope of the present disclosure.

Unless otherwise stated, the starting materials and reagents used in the following examples are all commercially available products or can be manufactured by using known methods.

A post-diffusion magnet is processed into 7-7-T mm standard sample blocks for testing the overall properties, and the overall magnetic properties are tested on a NIM-62000 device. A 1-1-1 mm cube is machined on a surface of the magnet and at a distance D from the surface toward a core, and the magnetic properties at a local position are tested by using a PFM.

Method for measuring a weight percentage of a heavy rare earth element on an outer surface S_{H}: A content of heavy rare earth at a depth of 0.08 mm to 0.12 mm from a surface perpendicular to a surface of a permanent magnet into the magnet is measured as x by using an X-ray fluorescence spectrometer (XRF) (with a total of five measurement points selected, including four corners and a center, and an average content of heavy rare earth at these five positions being calculated).

Method for measuring a weight percentage of heavy rare earth in the core of the magnet: A content of heavy rare earth at a position within a radius of 2 mm around a geometric center point of any cross section is measured as y by using an X-ray fluorescence spectrometer (XRF) (with a total of five measurement points including the geometric center point of the cross section arbitrarily selected, and an average content of heavy rare earth at these five positions being calculated).

Test method for demagnetization rate: Magnetic flux of a single-piece magnet is measured by using a fluxmeter at room temperature (26 °C) and at high temperature (130 °C for 2 h followed by air cooling), respectively, and an attenuation ratio of the magnetic flux is calculated.

### Example 1

(1) The following starting materials for a sintered neodymium-iron-boron permanent magnet were prepared according to the following weight percentage: 31% of PrNd, 2% of Co, 0.2% of Cu, 0.1% of Ga, 0.4% of Al, 0.1% of Zr, and 1% of B, with the balance being Fe. The starting materials described above were prepared into alloy slices by using a rapid hardening and strip casting method, and further produced into neodymium-iron-boron blanks. Then, 120 40-10-5 mm samples having a hexahedral structure were processed, and surfaces of the samples were designated as AA', BB', and CC' faces.
(2) Mixed metal Tb powder (referred to as "Tb powder" for short) was prepared by mixing 50 wt% metal Tb powder, 3.5 wt% toluene as an antioxidant, 1.5 wt% polyethylene glycol-400 as a dispersant, and the balance ethanol; and
   mixed metal Dy powder (referred to as "Dy powder" for short) was prepared by mixing 50 wt% metal Dy powder, 3.5 wt% toluene as an antioxidant, 1.5 wt% polyethylene glycol-400 as a dispersant, and the balance ethanol.
(3) Surfaces of face A and face A' perpendicular to an orientation direction were coated with Tb powder with a sample weight percentage of 0.7% (based on a magnet matrix); surfaces of face B and face B' parallel to both the orientation direction and a central axis of a motor were coated with Dy powder with a sample weight percentage of 0.4%; and surfaces of face C and face C' parallel to the orientation direction and perpendicular to the central axis of the motor were uncoated. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Example 2

Step (1) of Example 2 was the same as step (1) of Example 1.
(2) The method for preparing Tb powder was equivalent to that in Example 1; and mixed metal PrNd powder (referred to as "PrNd powder" for short) was prepared by mixing 50 wt% metal PrNd powder, 3.5 wt% toluene as an antioxidant, 1.5 wt% polyethylene glycol-400 as a dispersant, and the balance ethanol.
(3) The surfaces of the face A and the face A' perpendicular to the orientation direction were coated with mixed powder of Tb powder with a sample weight percentage of 0.7% and PrNd powder with a sample weight percentage of 0.5%; the surfaces of the face B and the face B' parallel to both the orientation direction and the central axis of the motor were coated with Tb powder with a sample weight percentage of 0.2%; and the surfaces of the face C and the face C' parallel to the orientation direction and perpendicular to the central axis of the motor were uncoated. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Example 3

Step (1) of Example 3 was the same as step (1) of Example 1.

Tb powder in Example 1 was used; the surface of the face A perpendicular to the orientation direction was coated with Tb powder with a sample weight percentage of 0.35%; the surfaces of the face B and the face B' parallel to both the orientation direction and the central axis of the motor were coated with Tb powder with a sample weight percentage of 0.2%; and the surfaces of the face C and the face C' parallel to the orientation direction and perpendicular to the central axis of the motor were uncoated. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Example 4

Step (1) of Example 4 was the same as step (1) of Example 1.

Tb powder in Example 1 was used; the surface of the face B parallel to both the orientation direction and the central axis of the motor was coated with Tb powder with a sample weight percentage of 0.35%; and the surfaces of the face C and the face C' parallel to the orientation direction and perpendicular to the central axis of the motor were uncoated, and the surfaces of the face A and the face A' perpendicular to the orientation direction were uncoated. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Example 5

Step (1) of Example 5 was the same as step (1) of Example 1.

Tb powder in Example 1 was used; the surfaces of the face A and the face A' perpendicular to the orientation direction were coated with Tb powder with a sample weight percentage of 0.7%; the surfaces of the face B and the face B' parallel to both the orientation direction and the central axis of the motor were coated with 0.2% Tb powder in regions 1 mm inward of four frames of the two surfaces, respectively; and the surfaces of the face C and the face C' parallel to the orientation direction and perpendicular to the central axis of the motor were uncoated. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Comparative Example 1

Step (1) of Comparative Example 1 was the same as step (1) of Example 1.

Tb powder in Example 1 was used; and the surfaces of the face A and the face A' perpendicular to the orientation direction were coated with Tb powder with a sample weight percentage of 0.7%. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Comparative Example 2

Step (1) of Comparative Example 2 was the same as step (1) of Example 1.

Tb powder and Dy powder in Example 1 were used; the surfaces of the face A and the face A' perpendicular to the orientation direction were coated with Tb powder with a sample weight percentage of 0.7%; the surfaces of the face B and the face B' parallel to both the orientation direction and the central axis of the motor were coated with Dy powder with a sample weight percentage of 0.4%; and the surfaces of the face C and the face C' parallel to the orientation direction and perpendicular to the central axis of the motor were coated with Dy powder with a sample weight percentage of 0.4%. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Comparative Example 3

Step (1) of Comparative Example 3 was the same as step (1) of Example 1.

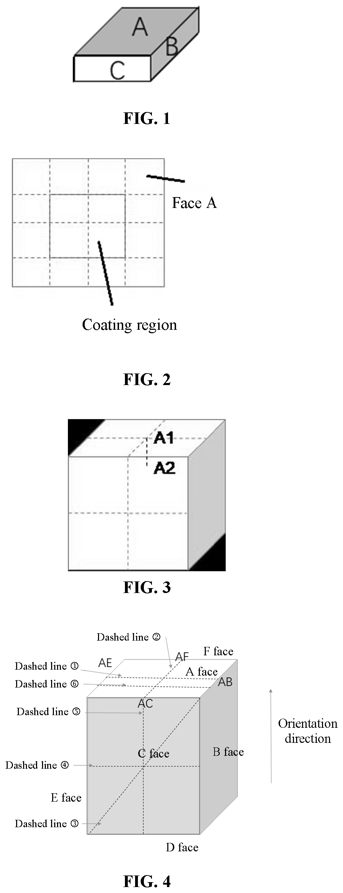

Tb powder in Example 1 was used; as shown in FIG. 2, taking the face A as an example, Tb powder with a sample weight percentage of 0.7% was coated within a position centered on the surface of the face A perpendicular to the orientation direction and having a length equal to one-half of the total length of the face A; that is, 25% of the area of the center was coated with 0.7% Tb; the remaining area of the face A was coated with Tb powder with a sample weight percentage of 0.9%; and a coating manner and a coating area of the face A' were the same as those of the face A described above. The coated magnet was subjected to a grain boundary diffusion treatment at 900 °C for 15 h and an aging treatment at 530 °C for 5 h to obtain a sintered neodymium-iron-boron permanent magnet with a gradient distribution.

### Comparative Example 4

Step (1) of Comparative Example 4 was the same as step (1) of Example 1.

Tb powder in Example 1 was used; the surfaces of the face A and the face A' perpendicular to the orientation direction were coated with Tb powder with a sample weight percentage of 0.7%; the surfaces of the face B and the face B' parallel to both the orientation direction and the central axis of the motor were uncoated; and the surfaces of the face C and the face C' parallel to the orientation direction and perpendicular to the central axis of the motor were coated with Dy powder with a sample weight percentage of 0.4%. The coated magnet was subjected to a grain boundary diffusion treatment at 900 °C for 15 h and an aging treatment at 530 °C for 5 h to obtain a sintered neodymium-iron-boron permanent magnet with a gradient distribution.

Contents of heavy rare earth of the surfaces of the faces in Examples 1-5 and Comparative Examples 1-4 are shown in Table 2 below, and Hcj, △Hcj at different corresponding surfaces and at positions at a distance D from the surfaces, as well as a loss rate of peak output torque of the motor after a 150 °C operational durability test, are shown in Table 3 below. Hcj-A1 is Hcj at a geometric center of the surface of the A face, i.e., Hcj at a center point A1 of the surface in FIG. 3. Hcj-A2 is Hcj at a position at a distance D of 2 mm from the surface in a direction perpendicular to the face A; i.e., Hcj at a center point A2 of the surface in FIG. 3. ΔHcj1 = (Hcj-A1) - (Hcj-A2), and the other B and C faces have the same definition.

**Table 1. Coating manners and coating contents of heavy rare earth on outer surfaces in Examples 1-5 and Comparative Examples 1-4**

| | Coating manners of heavy rare earth | | |
|---|---|---|---|
| | Faces A, A' | Faces B, B' | Faces C, C' |
| Example 1 | Double-sided coated with 0.7% Tb | Double-sided coated with 0.4% Dy | Uncoated |
| Example 2 | Double-sided coated with 0.7% Tb + 0.5% PrNd | Double-sided coated with 0.2% Tb | Uncoated |
| Example 3 | Face A being coated with 0.35% Tb | Double-sided coated with 0.2% Tb | Uncoated |
| Example 4 | Uncoated | Face B being coated with 0.35% Tb | Uncoated |
| Example 5 | Double-sided coated with 0.7% Tb | Double-sided coated; regions 1 mm inward of four edges of B and B' coated with 0.2% Tb | Uncoated |
| Comparative Example 1 | Double-sided coated with 0.7% Tb | Uncoated | Uncoated |
| Comparative Example 2 | Double-sided coated with 0.7% Tb | Double-sided coated with 0.4% Dy | Double-sided coated with 0.4% Dy |
| Comparative Example 3 | 25% of the area of the center coated with 0.7% Tb, 75% of the area of the periphery coated with 0.9% Tb | Uncoated | Uncoated |
| Comparative Example 4 | Double-sided coated with 0.7% Tb | Uncoated | Double-sided coated with 0.4% Dy |

In Table 1, the faces A and A' were perpendicular to the orientation direction; the faces B and B' were parallel to both the orientation direction and the central axis of the motor; and the faces C and C' were parallel to the orientation direction and perpendicular to the central axis of the motor.

Outer surfaces of permanent magnet materials prepared in Examples 1-5 and Comparative Examples 1-4 were subjected to heavy rare earth content detection. The detection results are shown in Table 2 below.

**Table 2. Contents of heavy rare earth of outer surfaces (wt%)**

| | A face | A' face | B face | B' face | C face | C' face |
|---|---|---|---|---|---|---|
| Example 1 | 5.3% Tb | 4.9% Tb | 4.7% Dy | 5.2% Dy | - | - |
| Example 2 | 5.8% Tb | 4.9% Tb | 4.3% Tb | 4.1% Tb | - | - |
| Example 3 | 5.1% Tb | - | 4.8% Tb | 4.2% Tb | - | - |
| Example 4 | - | - | 5.6% Tb | - | - | - |
| Example 5 | 4.9% Tb | 5.5% Tb | 2.9% Tb | 3.4% Tb | - | - |
| Comparative Example 1 | 5.5% Tb | 5.6% Tb | - | - | - | - |
| Comparative Example 2 | 5.1% Tb | 4.8% Tb | 5.1% Dy | 5.2% Dy | 4.9% Dy | 5.4% Dy |
| Comparative Example 3 | 5.5% Tb | 5.8% Tb | - | - | - | - |
| Comparative Example 4 | 5.1% Tb | 4.3% Tb | - | - | 4.4% Dy | 4.8% Dy |

In Table 2, "-" indicates that a heavy rare earth element is uncoated or a heavy rare earth element is not detected.

The magnetic properties of the permanent magnet materials prepared in the examples at different positions (the materials were separately tested after being divided) were tested, and the test results are shown in Table 3 below.

**Table 3. Test results of magnetic properties of permanent magnet materials in Examples 1-5 and Comparative Examples 1-4**

| | Bulk Br(T) | Hcj-A1 (kA/m) | Hcj-A2 (kA/m) | Hcj-B1 (kA/m) | Hcj-B2 (kA/m) | Hcj-C1 (kA/m) | Hcj-C2 (kA/m) | ΔHcj1 (kA/m) | ΔHcj2 (kA/m) | ΔHcj3 (kA/m) | Loss rate of peak torque |
|---|---|---|---|---|---|---|---|---|---|---|---|
| Example 1 | 1.387 | 1947 | 1929 | 2033 | 1962 | 1931 | 1927 | 18 | 71 | 4 | 1.67% |
| Example 2 | 1.385 | 1956 | 1924 | 2028 | 1966 | 1929 | 1923 | 32 | 62 | 6 | 1.52% |
| Example 3 | 1.392 | 1942 | 1905 | 2021 | 1948 | 1901 | 1897 | 37 | 73 | 4 | 2.43% |
| Example 4 | 1.388 | 1904 | 1891 | 2045 | 1957 | 1912 | 1903 | 13 | 88 | 9 | 4.33% |
| Example 5 | 1.392 | 1944 | 1916 | 2002 | 1947 | 1907 | 1899 | 28 | 55 | 8 | 2.03% |
| Comparative Example 1 | 1.391 | 1959 | 1927 | 1925 | 1922 | 1929 | 1920 | 32 | 3 | 9 | 26.70% |
| Comparative Example 2 | 1.388 | 1952 | 1921 | 2028 | 1950 | 2029 | 1945 | 31 | 78 | 84 | 1.58% |
| Comparative Example 3 | 1.389 | 1955 | 1926 | 1939 | 1933 | 1934 | 1932 | 29 | 6 | 2 | 19.83% |
| Comparative Example 4 | 1.399 | 1957 | 1923 | 1928 | 1922 | 2028 | 1953 | 34 | 6 | 75 | 15.86% |

In the present disclosure, ΔHcjn ≤ 0.3 kOe/mm, ΔHcjm ≥ 0.3 kOe/mm, and 0.3 kOe/mm = 47.76 (KA/m)/2 mm, and thus, ΔHcjn ≤ 47.76 (KA/m)/2 mm and ΔHcjm ≥ 47.76 (KA/m)/2 mm. For an S_{H} surface parallel to the orientation direction of the magnet, i.e., the B face, an absolute value of a coercivity difference at a distance D1 is ΔHcjm, and within a range of the distance D1 (D1 = 2 mm), ΔHcjm = |ΔHcj2|/D1/79.6;
for the A face, an absolute value of a coercivity difference at a distance D2 is ΔHcjnA, and within a range of the distance D2 (D2 = 2 mm), ΔHcjnA = |ΔHcj1|/D2; and
for the C face, an absolute value of a coercivity difference at the distance D2 is ΔHcjnB, and within the range of the distance D2 (D2 = 2 mm), ΔHcjnB = |ΔHcj3|/D2.
Calculation results of ΔHcjm, ΔHcjnA, and ΔHcjnB are shown in Table 4 below.

**Table 4. Test results of magnetic properties of permanent magnet materials in Examples 1-5 and Comparative Examples 1-4**

| | ΔHcjnA | ΔHcjm | ΔHcjnB |
|---|---|---|---|
| Example 1 | 0.11 | 0.45 | 0.03 |
| Example 2 | 0.2 | 0.39 | 0.04 |
| Example 3 | 0.23 | 0.46 | 0.03 |
| Example 4 | 0.08 | 0.55 | 0.06 |
| Example 5 | 0.18 | 0.35 | 0.05 |
| Comparative Example 1 | 0.2 | 0.02 | 0.06 |
| Comparative Example 2 | 0.19 | 0.49 | 0.53 |
| Comparative Example 3 | 0.18 | 0.04 | 0.01 |
| Comparative Example 4 | 0.21 | 0.04 | 0.47 |

In can be seen from the test data of Example 1 and Comparative Example 1 that: In Example 1, for S_{H} parallel to the orientation direction of the magnet, an absolute value of a coercivity difference per unit distance is defined as: ΔHcjm = ΔHcj2/2 mm/79.6 = 0.45 kOe/mm, and ΔHcjn of other S_{H} surfaces and/or S_{L} surfaces are 0.11 kOe/mm and 0.03 kOe/mm, respectively. For a neodymium-iron-boron permanent magnet with specific characteristic coercivity distributions, in which ΔHcjm > ΔHcjnA or ΔHcjnB (i.e., ΔHcjm > ΔHcjnA and ΔHcjm > ΔHcjnB), ΔHcjnA or ΔHcjnB ≤ 0.3 kOe/mm, and ΔHcjm ≥ 0.3 kOe/mm, Hcj at a characteristic position of the neodymium-iron-boron permanent magnet is enhanced, and the resistance of the magnet to a specific reversed magnetic field for demagnetization is significantly improved. Therefore, a loss rate of peak torque of the motor using the magnet of Example 1 after a high-temperature durability test is low, i.e., at 1.67%, which can meet the requirements of most high-performance motors. Similarly, in Examples 2-5 adopting different diffusion manners and different diffusion sources, the coercivity distribution requirements with specific characteristics, i.e., ΔHcjm > ΔHcjnA or ΔHcjnB, ΔHcjnA or ΔHcjnB ≤ 0.3 kOe/mm, and ΔHcjm ≥ 0.3 kOe/mm, are also satisfied. Similarly, loss rates of peak torque of motors using magnets of Examples 2-5 are relatively low, which can meet the requirements of most high-performance motors.

In Comparative Example 1, although ΔHcjn of other S_{H} surfaces and/or S_{L} surfaces satisfies the requirement of ΔHcjn ≤ 0.3 kOe/mm, ΔHcjm is only 0.02 kOe/mm and does not satisfy the requirements of ΔHcjm > ΔHcjn and ΔHcjm ≥ 0.3 kOe/mm. Similarly, in Comparative Examples 2-4, the characteristics of ΔHcjm > ΔHcjn, ΔHcjn ≤ 0.3 kOe/mm, and ΔHcjm ≥ 0.3 kOe/mm fail to be satisfied simultaneously, such that the coercivity distribution inside the magnet is not matched with the actual operating conditions of high-performance motors, resulting in insufficient performance or excessive performance. In addition, although Comparative Example 4 also exhibits a low loss rate of peak torque, it adopts an excessive diffusion manner, resulting in increased rare earth consumption and waste of resources and cost, and therefore is not a preferred protection manner of the present application.

### Example 6

(1) Preparation of a substrate: A permanent magnet material was prepared according to the following method. An alloy flake was prepared by subjecting at least 99% purity by weight of NdPr, Co, Al, Fe, Cu, Ga, Ti, and ferroboron to high-frequency melting in an argon atmosphere and casting the resulting melt onto a quenching roller. Contents of the starting materials are 31.5 wt% NdPr, 1.0 wt% Co, 0.5 wt% Al, 0.2 wt% Cu, 0.2 wt% Ga, 0.18 wt% Ti, and 0.98 wt% B, respectively, with the balance being Fe and inevitable impurities. The alloy was hydrogenated and pulverized into a coarse powder, and then the coarse powder was subjected to jet mill grinding to obtain a magnetic powder with a granularity D50 of 3.5 µm. The jet-milled powder described above was mixed with 0.2 wt% of lubricant zinc stearate for 2 h, and molding was performed at room temperature in an orientation field environment with a magnetic field intensity of 2 T. Then, the blank was put into a vacuum sintering furnace, and sintering was performed at 1070 °C for 6 h and an aging treatment was performed at 520 °C for 5 h to obtain a neodymium-iron-boron magnet matrix M10.
   The neodymium-iron-boron matrix described above was cut in the orientation direction into a magnet piece having a hexahedral structure of a product with a dimension of 10-8-6 mm, and the magnet pieces were designated as A face, B face, C face, D face, E face, and F face. The A face and the D face were opposite faces, the B face and the E face were opposite faces, and the C face and the F face were opposite faces, and a direction perpendicular to both the A face and the D face was the orientation direction, as shown in FIG. 1.
   A D10-10 mm sample column (a sample column with a diameter of 10 mm and a length of 10 mm) was machined from an M10 magnet for a property test. The magnetic properties were tested by using an NIM-62000 at a temperature of 20 ± 3 °C, and Br of the matrix was measured to be 1.412 T and Hcj of the matrix was measured to be 1169 kA/m. A content of C, a content of O, and a content of N in the magnet matrix M10 were tested to be 640 ppm, 510 ppm, and 460 ppm, respectively, by using a carbon-sulfur analyzer and an oxygen-nitrogen-hydrogen analyzer from Bruker.
(2) Preparation of a diffusion source containing heavy rare earth: TbF3 powder with an average particle size of 4 µm and absolute ethanol were mixed and stirred to obtain a diffusion source Y1. The concentration of the TbF3 powder was 80 wt%.
(3) Four surfaces parallel to the orientation direction of the magnet, i.e., the C face, the F face, the B face, and the E face in FIG. 1 were coated with the diffusion source Y1. The C face and the F face were coated with a 20 µm-thick diffusion source, and the B face and the E face were coated with a 15 µm-thick diffusion source.
(4) The neodymium-iron-boron magnet material obtained in step (3) was subjected to a grain boundary diffusion treatment at 900 °C for 15 h and an aging treatment at 550 °C for 4 h to prepare a plurality of groups of diffused neodymium-iron-boron magnets M11.
(5) The diffused neodymium-iron-boron magnet M11 was arbitrarily cut according to different cutting manners to obtain different cross sections. Hcj_{B} is coercivity of any cross section intersecting a surface of the magnet; and Hcj_{C} is coercivity of a geometric center point of any cross section.

### The magnet pieces of Examples 6-1 to 6-6 below were all obtained from Example 6.

### Example 6-1

Bisecting cutting was performed on the A face and the D face along a center point AE of an adjacent edge between the A face and the E face of the magnet piece having a hexahedral structure and a center point AB of an adjacent edge between the A face and the B face of the magnet piece, i.e., along a dashed line ① perpendicular to the ground in FIG. 1, to obtain a cross section S_{CF1} parallel to the C face and the F face.

Hcj_{CF1B} was coercivity of a surface where the cross section S_{CF1} intersects with the B face; and Hcj_{CF1C} was coercivity of a core of the cross section S_{CF1}. On the cross section S_{CF1}, the coercivity was distributed according to an equal division of a difference, where Hcj_{A12} = Hcj_{CF1B} - (Hcj_{CF1B} - Hcj_{CF1C})/3 and Hcj_{A23} = Hcj_{CF1B} - 2 * (Hcj_{CF1B} - Hcj_{CF1C})/3, and the cross section was equally divided into three regions. The specific distribution was shown in FIG. 2. An interface between adjacent regions was a regular curve, and an arc was symmetrical with respect to a center line thereof. Area ratios S₁, S₂, and S₃ of different regions were measured. In the cross section, a difference between the maximum value and the minimum value of the measured coercivity was denoted as δHcj.

### Example 6-2

Bisecting cutting was performed on the A face and the D face along a center point AF of an adjacent edge between the A face and the F face of the magnet piece having a hexahedral structure and a center point AC of an adjacent edge between the A face and the C face of the magnet piece, i.e., along a dashed line ② perpendicular to the ground in FIG. 1, to obtain a cross section S_{BE1} parallel to the B face and the E face.

Hcj_{BE1B} was coercivity of a surface where the cross section S_{BE1} intersects with the B face; and Hcj_{BE1C} was coercivity of a core of the cross section S_{BE1}. On the cross section S_{BE1}, the coercivity was distributed according to an equal division of a difference, where Hcj_{A12} = Hcj_{BE1B} - (Hcj_{BE1B} - Hcj_{BE1C})/3 and Hcj_{A23} = Hcj_{BE1B} - 2 * (Hcj_{BE1B} - Hcj_{BE1C})/3, and the cross section was divided into three regions. An interface between adjacent regions was a regular curve, and an arc was symmetrical with respect to a center line thereof. Area ratios of different regions were measured.

### Example 6-3

Bisecting cutting was performed on the face C and the face F along the adjacent edge between the A face and the B face of the magnet piece having a hexahedral structure and an adjacent edge between the D face and the E face of the magnet piece (cutting was performed along a diagonal line between the C face and the F face), i.e., along a dashed line ③ in FIG. 1. The cutting manner of each region of the cross section was equivalent to that in Example 6-1.

### Example 6-4

This example was equivalent to Example 6-1. Bisecting cutting was performed on the C face and the F face, i.e., along a dashed line ④ in FIG. 1. The cutting manner of each region of the cross section was equivalent to that in Example 6-1.

### Example 6-5

This example was equivalent to Example 6-2. Bisecting cutting was performed on the C face and the F face, i.e., along a dashed line ⑤ in FIG. 1. The cutting manner of each region of the cross section was equivalent to that in Example 6-2.

### Example 6-6

This example was equivalent to Example 6-1. Bisecting cutting was performed at one-third between the C face and the F face, i.e., along a dashed line ⑥ perpendicular to the ground in FIG. 1. The cutting manner of each region of the cross section was equivalent to that in Example 6-1.

### Example 7

The method for preparing the sintered neodymium-iron-boron permanent magnet in this example was substantially the same as that in Example 6, except that:
In step (2), a diffusion source containing heavy rare earth was prepared as follows: TbF3 powder with an average particle size of 4 µm and absolute ethanol were mixed and stirred to obtain a diffusion source Y1. The concentration of the TbF3 powder was 80 wt%.

DyF3 powder with an average particle size of 3 µm and absolute ethanol were mixed and stirred to obtain a diffusion source Y2. The concentration of the DyF3 powder was 85 wt%.

In step (3), the four surfaces parallel to the orientation direction of the magnet were coated with the diffusion sources Y1 and Y2. The C face and the F face were coated with a 50 µm-thick diffusion source Y1, and the B face and the E face were coated with a 10 µm-thick diffusion source Y2.

### Example 7-1

The cutting manner of the sintered neodymium-iron-boron permanent magnet in this example was equivalent to that in Example 6-1; however, the magnet to be cut was obtained from Example 7.

### Example 8

The method for preparing the sintered neodymium-iron-boron permanent magnet in this example was substantially the same as that in Example 6, except that:
In step (2), a diffusion source containing heavy rare earth was prepared as follows: TbH powder with an average particle size of 3.5 µm and absolute ethanol were mixed and stirred to obtain a diffusion source Y3. The concentration of the TbH powder was 60 wt%.

The TbH powder with the average particle size of 3.5 µm and DyH powder with an average particle size of 3 µm were mixed at a ratio of 1:1 to form mixed powder, and the mixed powder was then mixed and stirred with absolute ethanol to prepare a diffusion source Y4. The concentration of the mixed powder was 75 wt%.

In step (3), six surfaces of the magnet were coated with the diffusion sources Y3 and Y4. The C face and the F face were coated with a 30 µm-thick diffusion source Y3, the B face and the E face were coated with a 15 µm-thick diffusion source Y4, and the A face and the D face were coated with a 5 µm-thick diffusion source Y4.

### Example 8-1

The cutting manner of the sintered neodymium-iron-boron permanent magnet in this example was equivalent to that in Example 6-2; however, the magnet to be cut was obtained from Example 8.

### Example 9

The method for preparing the sintered neodymium-iron-boron permanent magnet in this example was substantially the same as that in Example 6, except that:
In step (2), a diffusion source containing heavy rare earth was prepared as follows: TbH powder with an average particle size of 3.5 µm and absolute ethanol were mixed and stirred to obtain a diffusion source Y3. The concentration of the TbH powder was 60 wt%.

In step (3), two surfaces perpendicular to the orientation direction of the magnet, i.e., the A face and the D face, were coated with the diffusion source Y3. The A face was coated with a 40 µm-thick diffusion source Y3, and the D face was coated with a 20 µm-thick diffusion source Y3.

### Example 9-1

The cutting manner of the sintered neodymium-iron-boron permanent magnet in this example was equivalent to that in Example 6-3; however, the magnet to be cut was obtained from Example 9.

### Comparative Example 5

The method for preparing the sintered neodymium-iron-boron permanent magnet in this example was substantially the same as that in Example 6, except that:
In step (1), the substrate was prepared as follows: A permanent magnet material was prepared according to the following method. An alloy flake was prepared by subjecting at least 99% purity by weight of NdPr, Co, Al, Fe, Cu, Ga, Zr, and ferroboron to high-frequency melting in an argon atmosphere and casting the resulting melt onto a quenching roller. Contents of the starting materials are 31 wt% NdPr, 0.8 wt% Co, 0.5 wt% Al, 0.2 wt% Cu, 0.15 wt% Ga, 0.10 wt%Zr, and 0.94 wt% B, respectively, with the balance being Fe and inevitable impurities. The alloy was hydrogenated and pulverized into a coarse powder, and then the coarse powder was subjected to jet mill grinding to obtain a magnetic powder with a granularity D50 of 3.5 µm. The jet-milled powder described above was mixed with 1.0 wt% of lubricant zinc stearate for 2 h, and molding was performed at room temperature in an orientation field environment with a magnetic field intensity of 2 T. Then, the blank was put into a vacuum sintering furnace, and sintering was performed at 1030 °C for 6 h and an aging treatment was performed at 550 °C for 6 h to obtain a neodymium-iron-boron magnet matrix M20.

A D10-10 mm sample column (a sample column with a diameter of 10 mm and a length of 10 mm) was machined from an M20 magnet for a property test. Br of the matrix was measured to be 1.358 T and Hcj of the matrix was measured to be 1480 kA/m. A content of C, a content of O, and a content of N in the magnet matrix M20 were tested to be 767 ppm, 683 ppm, and 670 ppm, respectively, by using a carbon-sulfur analyzer and an oxygen-nitrogen-hydrogen analyzer from Bruker.

### Comparative Example 5-1

The cutting manner of the sintered neodymium-iron-boron permanent magnet in this example was equivalent to that in Example 6-4; however, the magnet to be cut was obtained from Comparative Example 5.

### Comparative Example 6

The method for preparing the sintered neodymium-iron-boron permanent magnet in this example was substantially the same as that in Example 6, except that:
In step (2), a diffusion source containing heavy rare earth was prepared as follows: TbH powder with an average particle size of 3.5 µm and absolute ethanol were mixed and stirred to obtain a diffusion source Y3. The concentration of the TbH powder was 60 wt%.

In step (3), the B face, the C face, the E face, and the F face parallel to the orientation direction of the magnet were each coated with a 20 µm-thick diffusion source Y1.

### Comparative Example 6-1

The cutting manner of the sintered neodymium-iron-boron permanent magnet in this example was equivalent to that in Example 6-5; however, the magnet to be cut was obtained from Comparative Example 6.

### Comparative Example 7

The method for preparing the sintered neodymium-iron-boron permanent magnet in this example was substantially the same as that in Example 6, except that:
In step (2), a diffusion source containing heavy rare earth was prepared as follows: TbH powder with an average particle size of 3.5 µm and absolute ethanol were mixed and stirred to obtain a diffusion source Y3. The concentration of the TbH powder was 60 wt%.

In step (3), the A face, the B face, the C face, the D face, the E face, and the F face of the magnet were each coated with a 20 µm-thick diffusion source Y1.

### Comparative Example 7-1

The cutting manner of the sintered neodymium-iron-boron permanent magnet in this example was equivalent to that in Example 6-5; however, the magnet to be cut was obtained from Comparative Example 7.

### Comparative Example 8

The method for preparing the sintered neodymium-iron-boron permanent magnet in this example was substantially the same as that in Example 6, except that:
In step (2), a diffusion source containing heavy rare earth was prepared as follows: TbH powder with an average particle size of 3.5 µm and absolute ethanol were mixed and stirred to obtain a diffusion source Y3. The concentration of the TbH powder was 60 wt%.

In step (3), the A face, the B face, the C face, the D face, the E face, and the F face of the magnet were coated with a 40 µm-thick diffusion source Y1 at positions 2 mm away from edges of the magnet, while the remaining central region was uncoated.

### Comparative Example 8-1

The cutting manner of the sintered neodymium-iron-boron permanent magnet in this example was equivalent to that in Example 6-5; however, the magnet to be cut was obtained from Comparative Example 8.

**Table 5. Test results of detection performance, area, and contents of heavy rare earth of magnets in examples and comparative examples**

| | Hcj_{B} (kA/m) | Hcjc (kA/m) | S₁/S | Hcj_{A12} (kA/m) | Br_{A12} (T) | **RH1** (wt%) |
|---|---|---|---|---|---|---|
| Example 6-1 | 1947 | 1880 | 0.11 | 1925 | 1.385 | 4.52 |
| Example 6-2 | 1956 | 1860 | 0.10 | 1924 | 1.386 | 4.44 |
| Example 6-3 | 1962 | 1874 | 0.13 | 1933 | 1.383 | 4.67 |
| Example 6-4 | 1924 | 1889 | 0.12 | 1912 | 1.390 | 4.32 |
| Example 6-5 | 1965 | 1883 | 0.11 | 1938 | 1.382 | 4.62 |
| Example 6-6 | 1985 | 1892 | 0.13 | 1954 | 1.381 | 4.78 |
| Example 7-1 | 1980 | 1901 | 0.12 | 1954 | 1.385 | 5.01 |
| Example 8-1 | 1986 | 1903 | 0.14 | 1958 | 1.385 | 4.03 |
| Example 9-1 | 1923 | 1877 | 0.14 | 1908 | 1.387 | 3.54 |
| Comparative Example 5-1 | 1902 | 1820 | 0.12 | 1875 | 1.390 | 4.02 |
| Comparative Example 6-1 | 1952 | 1864 | 0.26 | 1923 | 1.386 | 4.87 |
| Comparative Example 7-1 | 1956 | 1922 | 0.28 | 1945 | 1.384 | 4.97 |
| Comparative Example 8-1 | 1872 | 1192 | 0.05 | 1645 | 1.401 | 5.32 |

**Table 1 (Cont.)**

| | S₂/S | Hcj_{A23} (kA/m) | Br_{A23} (T) | RH2 (wt%) | S₃/S | RH3 (wt%) | δHcj (kA/m) | Demagnetization rate(%) |
|---|---|---|---|---|---|---|---|---|
| Example 6-1 | 0.25 | 1902 | 1.391 | 3.21 | 0.64 | 0.69 | 34 | 1.32 |
| Example 6-2 | 0.26 | 1892 | 1.393 | 3.04 | 0.64 | 1.21 | 48 | 1.47 |
| Example 6-3 | 0.25 | 1903 | 1.391 | 3.15 | 0.62 | 0.98 | 44 | 1.21 |
| Example 6-4 | 0.27 | 1901 | 1.392 | 2.97 | 0.61 | 0.87 | 18 | 1.33 |
| Example 6-5 | 0.26 | 1910 | 1.390 | 3.19 | 0.63 | 0.92 | 41 | 1.28 |
| Example 6-6 | 0.24 | 1923 | 1.389 | 3.24 | 0.63 | 1.04 | 47 | 1.06 |
| Example 7-1 | 0.23 | 1927 | 1.392 | 3.97 | 0.65 | 1.11 | 40 | 0.98 |
| Example 8-1 | 0.27 | 1931 | 1.391 | 3.64 | 0.59 | 1.01 | 42 | 0.89 |
| Example 9-1 | 0.23 | 1892 | 1.393 | 3.12 | 0.63 | 0.65 | 23 | 1.48 |
| Comparative Example 5-1 | 0.19 | 1847 | 1.394 | 2.89 | 0.69 | 0.32 | 41 | 3.21 |
| Comparative Example 6-1 | 0.42 | 1893 | 1.392 | 2.98 | 0.32 | 1.23 | 44 | 3.02 |
| Comparative Example 7-1 | 0.54 | 1933 | 1.393 | 3.22 | 0.18 | 1.54 | 17 | 3.25 |
| Comparative Example 8-1 | 0.16 | 1419 | 1.406 | 4.73 | 0.79 | 0.04 | 340 | 4.32 |

It can be seen from Examples 6-1 to 8-1 that, taking Hcj_{A} as a boundary, the magnet satisfies that the coercivity of the regions follows Hcj_{A12} > Hcj_{A23} > Hcj_{A34} ... > Hcj_{A(n-1)n}, and the remanence satisfies Br_{T12} < Br_{T23} < Br_{T34} ... < Br_{T(n-1)n}. When the magnet further satisfies S₁ < S₂ < S₃ ... < Sₙ, and S₁/S ≤ 1/(2 * N) for the first region and 1/N ≤ Sₙ/S ≤ 2/N for the N-th region, the demagnetization rate of the permanent magnet material is not more than 2%, and the product exhibits excellent stability and is more suitable for embedded motor applications.

The sum of the C content, the O content, and the N content of the product of Comparative Example 5-1 is 2120 ppm. As the C content, the O content, and the N content increase, diffusion channels of the magnet are hindered from penetrating deeply, resulting in non-uniform diffusion and an excessively large area of S₃, and the demagnetization rate of the magnet is 3.21%, leading to deteriorated stability. In addition, Comparative Example 6-1 and Comparative Example 7-1, in which four or six surfaces are uniformly coated, also suffer from excessive diffusion of the magnet, resulting in waste of heavy rare earth resources. Further, when a diffusion coating manner with at least three surfaces having different coating amounts is adopted, the diffusion depth and diffusion effect are more highly consistent with the actual easy-demagnetization regions of the magnet during motor operation, thereby enabling efficient utilization of heavy rare earth, and the squareness can be ensured to be greater than or equal to 0.9, thereby ensuring the demagnetization resistance of the magnet.

In Comparative Example 8-1, a method of coating only corner regions of the magnet is adopted. This method ignores that the diffusion rate of the magnet increases sharply with increasing diffusion depth, such that the core lacks sufficient demagnetization resistance, and the demagnetization rate of the magnet also increases.

The embodiments of the present disclosure have been described above by way of example. However, the protection scope of the present disclosure is not limited to the embodiments described above. Any modification, equivalent replacement and improvement and the like made by those skilled in the art without departing from the spirit and principle of the present disclosure shall fall within the protection scope of the present disclosure.

## Claims

1. An R-T-B based permanent magnet material having a polyhedral structure, wherein R comprises a light rare earth element and a heavy rare earth element;
the light rare earth element RL comprises at least one or two selected from neodymium and praseodymium;
the heavy rare earth element RH comprises at least one or two selected from dysprosium and terbium; T comprises at least iron;
B is boron;
the permanent magnet material has the polyhedral structure, and the polyhedral structure comprises at least three outer surfaces, wherein the outer surfaces of the polyhedral structure differ in a content of heavy rare earth;
there is at least one outer surface S_{H} among the outer surfaces of the polyhedral structure, and a weight percentage of a heavy rare earth element of the outer surface S_{H} is higher than that of heavy rare earth element of a core of a polyhedron;
other outer surfaces in the polyhedral structure, except for the outer surface S_{H}, are referred to as S_{L}; and
the outer surfaces S_{L} are parallel to an orientation direction of a magnet of the permanent magnet material, and/or the outer surfaces S_{L} are not parallel to a central axis direction of a motor in which the permanent magnet material is located.

2. The permanent magnet material according to claim 1, wherein after the permanent magnet material undergoes a 150°C operational durability test, a loss rate of peak output torque of the motor is not more than 5% ;
preferably, when a number of the outer surfaces of the polyhedron is n, a number n_{H} of an outer surfaces S_{H} is: 1 ≤ n_{H} ≤ n;
preferably, the permanent magnet material further comprises or does not comprise M, the M being selected from one or more of a transition metal element and a non-metal element;
preferably, a mass percentage of R is not less than 28.5% and not more than 32.5%, based on a mass of the permanent magnet material;
preferably, a mass percentage of B is not less than 0.88% and not more than 1.05%, based on a mass of the permanent magnet material;
preferably, a total mass percentage of M is not less than 0.1% and not more than 4.0%, based on a mass of the permanent magnet material; or
preferably, a total mass of C, O, and N does not exceed 2000 ppm, based on a mass of the permanent magnet material.

3. The permanent magnet material according to claim 1 or 2, wherein coercivity shows a decreasing trend from a surface of the permanent magnet material toward a core of the permanent magnet material;
for an S_{H} surface parallel to the orientation direction of the magnet, an absolute value of a coercivity difference at a distance D1 is ΔHcjm; for example, within a range of the distance D1, ΔHcjm = |ΔHcj|/D1;
for other S_{H} surfaces and/or S_{L} surfaces, an absolute value of a coercivity difference at a distance D2 is ΔHcjn; for example, within a range of the distance D2, ΔHcjn = |ΔHcj|/D2; and
when D1 = D2, and distances between starting points of D1 and D2 and a surface of the magnet are equal, ΔHcjm > ΔHcjn.

4. The permanent magnet material as claimed in any one of claims 1-3, wherein the distance D1 or D2 represents a distance between any two points between the surface of the permanent magnet material and the core of the permanent magnet material;
preferably, for an S_{H} surface parallel to both the orientation direction of the magnet and a central axis of the motor, an absolute value of a coercivity difference per unit distance is ΔHcjm;
preferably, when the polyhedron is of a non-hexahedral structure, an angle between the S_{H} surface of the magnet and the orientation direction of the magnet is α, and α ≤ 45°; or
preferably, ΔHcjn ≤ 0.3 kOe/mm, and ΔHcjm ≥ 0.3 kOe/mm.

5. The permanent magnet material as claimed in any one of claims 1-4, wherein the permanent magnet material has at least one cross section, the cross section is divided into N regions from a surface of the magnet to a core of the magnet, and 3 ≤ N ≤ 10; and coercivity at interfaces between adjacent regions is the same, and along the surface of the magnet to the core of the magnet, coercivity at interfaces between regions gradually decreases in a direction parallel to the orientation direction; preferably, in a case that coercivity differences at the interfaces between the adjacent regions are the same, i.e., in a case that Hcj_{A12} - Hcj_{A23} = Hcj_{A23} - Hcj_{A34} ... = Hcj_{A(n-2)(n-1)} - Hcj_{A(n-1)n}, areas of the regions satisfy: S₁ < S₂ < S₃ ... < Sₙ;
the material comprises at least the N regions, which are sequentially denoted as a first region, a second region, a third region, ..., and an N-th region from the surface of the magnet to the core of the magnet; coercivity at an interface between the first region and the second region is denoted as Hcj_{A12}, and an area ratio of the first region is denoted as S₁; coercivity at an interface between the second region and the third region is denoted as Hcj_{A23}, and an area ratio of the second region is denoted as S₂; coercivity at an interface between the third region and a fourth region is denoted as Hcj_{A34}, and an area ratio of the third region is denoted as S₃, and so on; and coercivity at an interface between an (N-1)-th region and the N-th region is denoted as Hcj_{A(n-1)n}, and an area ratio of the (N-1)-th region is denoted as S₍ₙ₋₁₎; preferably, the coercivity at the interfaces between the regions satisfies: Hcj_{A12} > Hcj_{A23} > Hcj_{A34} ... > Hc_{jA(n-1)n};
preferably, the interfaces between the adjacent regions are irregular curves;
preferably, the interfaces between the adjacent regions are non-linearly distributed with no intersection;
preferably, the interfaces between the adjacent regions are arc-shaped; or
preferably, the arc is a regular curve, and the arc is symmetrical with respect to a center line thereof.

6. The permanent magnet material according to claim 5, wherein the permanent magnet material has at least one cross section, and △Hcj ≥ 20 kA/m; and ΔHcj is a coercivity difference at adjacent interfaces, i.e., Hcj_{A12} - Hcj_{A23} or Hcj_{A23} - Hcj_{A34}, and so on;
preferably, a cross-sectional area of the permanent magnet material from a surface of the magnet to a core of the magnet is S, a ratio of an area S₁ of a first region to S satisfies: S₁/S ≤ 1/(2 * N), and a ratio of an area Sₙ of an N-th region to S satisfies: 1/N ≤ Sₙ/S ≤ 2/N;
preferably, on the cross section, an average content of heavy rare earth of each region of the permanent magnet material is different from that of any other region;
preferably, on the cross section, a content of heavy rare earth of each region gradually decreases from the surface of the magnet to the core of the magnet in the orientation direction;
preferably, a difference in a content of heavy rare earth between a first region and a last region is less than or equal to 5 wt%;
preferably, a difference in a content of heavy rare earth between adjacent regions is less than or equal to 3 wt%;
preferably, the permanent magnet material has at least three surfaces that are not parallel to one another, wherein in the three surfaces, in a direction perpendicular to each surface, absolute values of differences between a maximum coercivity value at an edge position and a minimum coercivity value at a core position are different from one another:
in at least one surface, an absolute value δHcjₐ of the difference between the maximum coercivity value at the edge position and the minimum coercivity value at the core position is greater than or equal to 40 kA/m, for example, 40 kA/m ≤ δHcjₐ ≤ 160 kA/m;
in at least one surface, an absolute value δHcj_{b} of the difference between the maximum coercivity value at the edge position and the minimum coercivity value at the core position is greater than or equal to 20 kA/m, for example, 20 kA/m ≤ δHcj_{b} ≤ 80 kA/m; and
in at least one surface, an absolute value δHcj_{c} of the difference between the maximum coercivity value at the edge position and the minimum coercivity value at the core position is greater than or equal to 5 kA/m, for example, 5 kA/m ≤ δHcj_{c} ≤ 40 kA/m;
preferably, a demagnetization rate of the permanent magnet material is not more than 3%;
preferably, remanence at interfaces between adjacent regions is the same, and the remanence at the interfaces gradually increases in the orientation direction;
the remanence at the interfaces between the adjacent regions is denoted as Br_{T}, and remanence at an interface between a first region and a second region is denoted as Br_{T12}; remanence at an interface between the second region and a third region is denoted as Br_{T23}; remanence at an interface between the third region and a fourth region is denoted as Br_{T34}, and so on; remanence at an interface between an (N-1)-th region and an N-th region is denoted as Br_{T(n-1)n}; and remanence at interfaces between regions satisfies: Br_{T12} < Br_{T23} < Br_{T34} ... < Br_{T(n-1)n}; or
preferably, ΔBr ≤ 0.04 T, and ΔBr represents a remanence difference at adjacent interfaces, i.e., Br_{T12} - Br_{T23} or Br_{T34} - Br_{T23}, and so on.

7. A method for preparing the permanent magnet material as claimed in any one of claims 1-6, wherein the method comprises the following steps:
(a) coating a mixture A and/or a mixture B on a surface perpendicular to an orientation direction of a magnet matrix, and coating the mixture A and/or the mixture B on a surface parallel to the orientation direction of the magnet matrix; and
(b) performing a grain boundary diffusion treatment and an aging treatment on a neodymium-iron-boron magnet material obtained in step (a) to obtain a sintered neodymium-iron-boron permanent magnet with a gradient distribution.

8. The method according to claim 7, wherein the mixture A and/or the mixture B each comprise: RH powder and/or RL powder;
preferably, when the mixture A and/or the mixture B comprises Dy, a percentage of a Dy element in weight of a magnet matrix is 0.3% to 1.2%; and when the mixture A and/or the mixture B comprises Tb, a percentage of a Tb element in the weight of the magnet matrix is 0.1% to 0.7%; or
preferably, when the mixture A and/or the mixture B includes Pr and/or Nd, a percentage of Pr and/or Nd in weight of a magnet matrix is 0.3% to 1.2%.

9. The method according to claim 7, wherein the method comprises a thermal diffusion treatment and a tempering treatment.

10. Use of the permanent magnet material as claimed in any one of claims 1-6 in fields of motors, loudspeakers, magnetic separators, computer disk drives, magnetic resonance imaging apparatuses, and the like, preferably use in embedded motors, particularly use in the embedded motors as a motor rotor magnet; and
preferably, a motor, wherein the motor comprises the R-T-B based permanent magnet material as claimed in any one of claims 1-6.
